# EUROPÄISCHE PATENTSCHRIFT

(11) **EP 0 590 266 B1**
(45) Veröffentlichungstag und Bekanntmachung des Hinweises auf die Patenterteilung: **15.05.1996**
(21) Anmeldenummer: 93112240.2
(22) Anmeldetag: 30.07.1993
(51) Int. Cl.: B65G 47/68, B65G 47/71, B65G 54/02, B65G 47/26

(54) **Fördervorrichtung zum Positionieren von Produktportionen**
Conveyor device for positioning of product portions
Dispositif de transport pour positionner des portions de produit

(30) Priorität: 26.09.1992 DE 4232387
(43) Veröffentlichungstag der Anmeldung: 06.04.1994
(73) Patentinhaber: Dixie-Union Verpackungen GmbH, D-87437 Kempten (DE)
(72) Erfinder: Hiederer, Günther, D-87435 Kempten (DE)
(74) Vertreter: Pfister, Helmut, Dipl.-Ing.

(56) Entgegenhaltungen:
- EP-A- 0 043 399
- US-A- 4 637 508
- US-A- 4 846 336
- US-A- 5 131 523

## Beschreibung

Die Erfindung betrifft eine Fördervorrichtung zum Positionieren von Produktportionen, um die Zahl der Reihen der Produktportionen zu verändern, wobei die Produktportionen auf in Förderrichtung bewegten Unterlagen ruhen, die durch verstellbare Steuerungsmittel seitlich verschiebbar sind.

Beim Verpacken von Lebensmitteln tritt das Problem auf, daß eine Bearbeitungsmaschine, beispielsweise eine Schneidmaschine, eine Reihe von Produktportionen fertigt und daß eine nachfolgende Bearbeitungsmaschine, beispielsweise eine Verpackungsmaschine, mehrreihig ausgestaltet ist und gleichzeitig mehrere Reihen von Produktportionen verarbeitet. Aus der einen Reihe, die die vorgeschaltete Maschine fertigt, müssen somit durch geeignete Fördervorrichtungen mehrere Reihen von Produktströmen erzeugt werden.

Werden die Produktportionen einer Reihe gewogen und sollen die Portionen mit unzulässigem Gewicht ausgeschieden werden, ist es ebenfalls notwendig, aus der einen Reihe zwei Reihen zu bilden, und zwar eine Reihe mit den Produktportionen mit dem Normalgewicht und eine Reihe mit den Produktportionen mit dem unzulässigen Gewicht.

In anderen Fällen tritt das umgekehrte Problem auf. Es ist aus mehreren Reihen von Produktportionen eine kleinere Zahl von Reihen oder eine einzige Reihe zu formen.

Derartige Linienverteiler oder auch Linienvereiniger sind beispielsweise beschrieben in der US-A-4.431.104 oder auch in US-A-4.637.508. Die Produktportionen liegen auf nebeneinander geführten endlosen Förderschnüren, und durch geeignete Umlenkung wird die Zahl der Reihen verändert.

In der FR-PS 2 587 007 liegen die Produktportionen auf einem Förderband und können durch seitliche, verschwenkbare Führungen auf dem Förderband seitlich verschoben werden.

In der DE-OS 36 42 123 sind Förderbänder aus parallelen Förderschnüren beschrieben, die seitlich verstellbar sind und auf ein unterschiedliches Niveau führen, so daß die Zahl der Reihen von Produktportionen veränderbar ist.

Bei einer Fördervorrichtung der eingangs angegebenen Gattung werden seitlich verschiebbare Unterlagen benützt, wobei die Unterlagen von einem umlaufenden Fördermittel in Förderrichtung bewegt und durch Steuerungsmittel seitlich verschoben werden.

Allen bekannten, vorstehend beschriebenen Fördervorrichtungen ist gemeinsam, daß sie sehr schwer zu reinigen sind. Sie bestehen aus einer Großzahl von Einzelteilen. An diesen Teilen lagert sich Staub ab und außerdem Abrieb vom Transportgut. Vor allem bei der Verpackung von Lebensmitteln ergibt sich ein erhebliches hygienisches Problem. Ein intensives Reinigen sollte auch alle Elemente der Fördervorrichtung, also die Ketten, Förderbänder, Schnüre, Umlenkrollen und die zugehörigen Einrichtungen erfassen. Dennoch ist der Reinigungserfolg gering. Hinzu kommt, daß beim Reinigen die einzelnen Teile auch entfettet werden, so daß schlechte Gleiteigenschaften erhalten werden. Ein sachgemäßes Einfetten ist schwierig und aufwendig. Beim Betrieb der schnell laufenden Fördervorrichtungen ergibt sich eine erhebliche Geräuschbildung.

Der Erfindung liegt die Aufgabe zugrunde, die Fördervorrichtung der eingangs angegebenen Gattung dahingehend weiterzuentwickeln, daß die hygienischen Verhältnisse wesentlich verbessert sind.

Erfindungsgemäß wird die Aufgabe dadurch gelöst, daß die Unterlagen mit Magnetelementen versehen sind und auf einer dünnen Platte aus nicht magnetisierbarem Material aufliegen und daß unter der Platte weitere Magnetelemente angeordnet sind, die mit den Magnetelementen der Unterlagen magnetisch zusammenwirken und diese mitnehmen und die Unterlagen sowohl in Förderrichtung bewegen als auch seitlich verschieben.

Durch die Anwendung einer Platte gemäß der Erfindung wird der Bereich, in dem sich die Produktportionen bewegen, völlig getrennt von dem Bereich der Fördervorrichtung, der den Antrieb und die zugehörigen Elemente umfaßt. Oberhalb der Platte sind nur die Unterlagen für die Produktportionen vorgesehen, unter der Platte dagegen alle Elemtente der Fördervorrichtung.

Diese Trennung in zwei Bereiche erleichtert wesentlich die Sauberhaltung der Gesamtvorrichtung. Der Bereich oberhalb der Platte ist glatt, und die Reinigung bereitet daher keine Probleme. Die Unterlagen selbst können leicht abgenommen werden und in einer geeigneten Reinigungsmaschine bearbeitet werden. Die Platte selbst ist im wesentlichen glatt.

Da die Antriebselemente unter der Platte angeordnet sind, können diese zum Beispiel gekapselt werden, wodurch einerseits die Verschmutzungsgefahr reduziert wird und andererseits auch die gleitenden Teile gut geschmiert werden können. Eine regelmäßige Reinigung dieses Bereiches ist nicht notwendig.

Die erfindungsgemäße Ausbildung reduziert auch stark die Geräuschbildung und den Verschleiß.

Die Magnetelemente, die die Erfindung verwendet, sind beispielsweise mindestens teilweise Permanentmagnete. Dabei können die Permanentmagnete auf der einen Seite der Platte angeordnet sein und mit anderen Permanentmagneten auf der anderen Seite der Platte zusammenwirken. Es ist aber auch möglich, mit ferromagnetischen Magnetelementen zu arbeiten, die dann mit Permanentmagneten zusammenwirken.

Auch die Anwendung von Elektromagneten gehört zu den erfindungsgemäßen Vorschlägen. In Anbetracht der hohen Zugkräfte von Permanentmagneten sind diese jedoch in der Regel zu bevorzugen.

Die Platte, die die Erfindung benützt, besteht vorzugsweise aus nichtrostendem austenitischem Chrom-Nickel-Stahl, der im Handel häufig als V2A-Stahl bezeichnet wird. Die Verwendung dieses Materials hat den Vorteil, daß sich die Flächen gut sauberhalten lassen, andererseits das unmagnetische Material die Wirkung der Magnetelemente nicht beeinträchtigt.

Anstelle einer V2A-Platte können auch in Sonderfällen Platten aus einem anderen Werkstoff, beispielsweise aus Messing oder Kunststoff angewandt werden.

Günstig ist es, wenn jede Unterlage nebeneinander zwei Magnetelemente aufweist, denen je zwei Magnetelemente unter der Platte entsprechen. Auf diese Weise wird eine Ausrichtung der Unterlagen sichergestellt, derart, daß die einzelnen Unterlagen jeweils parallel zueinander angeordnet sind.

In der Regel bilden mehrere Unterlagen eine Auflagefläche für die Produktportionen und werden jeweils gleichartig zueinander verschoben, wenn auch Parallelbewegungen unter den einzelnen Unterlagen, die mit einer Produktportion zusammenwirken, möglich sind.

Die Platte, auf der die Unterlagen aufliegen, besitzt nach einem weiteren Merkmal der Erfindung auf der Auflageseite eine flache Struktur. Einzelne Teilbereiche der Auflagefläche stehen dabei geringfügig in der Größenordnung von etwa 0,1 bis 0,3 Millimeter nach oben vor, derart, daß die Unterlagen nur auf diesen vorstehenden Bereichen aufliegen. Diese Strukturierung ergibt verbesserte Gleiteigenschaften für die Unterlagen, die nicht vollflächig, sondern nur an einzelnen Stellen auf der Platte aufliegen.

In besonderen Fällen kann es vorteilhaft sein, wenn die Platte einen vorzugsweise auswechselbaren Kunststoffüberzug trägt. Ein solcher Überzug verhindert den direkten Kontakt der Unterlagen mit der Platte und verbessert beträchtlich die hygienischen Verhältnisse.

Die Unterlagen, die die Erfindung verwendet, bestehen vorzugsweise aus Kunststoffkörpern, in die die Magnetelemente eingesetzt sind. Dabei können beispielsweise handelsübliche Permanentmagnete Verwendung finden.

Bei einer bevorzugten Ausführungsform der Erfindung sind die Magnetelemente unter der Platte von einer endlosen Förderkette getragen, die im wesentlichen aus parallelen, sich rechtwinklig zur Förderrichtung erstreckenden Führungsstangen besteht, wobei die Magnetelemente auf den Führungsstangen verschiebbar sind. An den Magnetelementen sind Führungsstifte vorgesehen, die mit schienenartigen bzw. weichenartigen Führungsmitteln zusammenwirken. Die Platte ist dabei der Gestalt der Förderkette angepaßt und umhüllt diese.

Eine Bauweise dieser Art löst auch das Problem der Rückführung der Unterlagen von dem Ende der Fördervorrichtung an deren Anfang. Die ganze Förderkette kann gekapselt werden. Dabei empfiehlt es sich, wenn eine abnehmbare stirnseitige Abdeckung für die Förderkette vorgesehen wird. Bei Abnahme dieser Abdeckung ist die Förderkette zur Inspektion usw. zugänglich.

Bei einer Bauweise dieser Art ergibt sich, daß die Platte an den Enden der Förderstrecke halbzylinderförmig gewölbt ist und daß die Unterlagen dieser zylinderförmigen Wölbung folgen müssen. Es ist gefunden worden, daß es günstig ist, wenn die auf der Platte aufliegenden Flächen der Unterlagen konkav geformt sind. Hierdurch wird erreicht, daß im Umlenkungsbereich die Unterlagen dicht auf der Platte aufliegen und der Abstand zwischen den zusammenwirkenden Magnetelementen auf den beiden Seiten der Platte möglichst gering wird. Dadurch werden die magnetischen Kräfte gesteigert. Dies ist notwendig, um zu verhindern, daß im Umlenkbereich die Unterlagen unter Einwirkung der Zentrifugalkraft abgeschleudert werden.

Die konkave Form der Auflagefläche der Unterlagen hat weiter die Wirkung, daß die Unterlagen auf der Platte eine leichte Schabewirkung ausüben, wodurch Verunreinigungen bzw. Rückstände weggeschoben werden.

Durch die erfindungsgemäße Anordnung werden unter der Platte wandernde Magnetfelder erzeugt, wobei die Wanderbewegung im wesentlichen durch mechanische Mittel, beispielsweise durch die Förderkette und auch durch die seitliche Verschiebung der Magnetelemente auf der Förderkette, erzielt wird.

Die Erfindung ist jedoch auch dadurch realisierbar, daß auf mechanische Mittel unter der Platte ganz oder auch teilweise verzichtet wird. So schlägt die Erfindung vor, daß die Magnetelemente unter der Platte aus einer Vielzahl von Elektromagneten bestehen, die zusammen durch Zu- und Abschalten einzelner Magnete ein wanderndes Magnetfeld bilden, das die Unterlagen in Förderrichtung bewegt und/oder auch seitlich verschiebt.

Auf den Führungsstangen der Förderkette können beispielsweise eine Mehrzahl von Elektromagneten angeordnet sein, die durch geeignete Beaufschlagung eine seitliche Verschiebung der Unterlagen herbeiführen.

Es ist auch möglich, ganz auf mechanische Mittel zu verzichten und unter der Platte eine Vielzahl von Elektromagneten anzuordnen, die einzeln gesteuert sind. Die dadurch erhaltenen wandernden Magnetfelder nehmen dann die Unterlagen auf der Oberseite der Platte mit.

Die Rückführung der Unterlagen kann beispielsweise ähnlich wie beim endlosen Förderband auf der Unterseite erfolgen, oder auch durch eine seitliche Ausweichbewegung in einen Rückführbereich für die Unterlagen.

In der Zeichnung ist ein Ausführungsbeispiel der Erfindung schematisch dargestellt. Es zeigen:
- Fig. 1: eine Draufsicht auf eine erfindungsgemäße Vorrichtung,
- Fig. 2: eine Schnittdarstellung der Vorrichtung gemäß Fig. 1, und zwar eines Schnittes unter der Platte,
- Fig. 3: eine weitere Schnittdarstellung der Vorrichtung gemäß den Fig. 1 und 2 etwa in Höhe der Achse der Umlenkrollen,

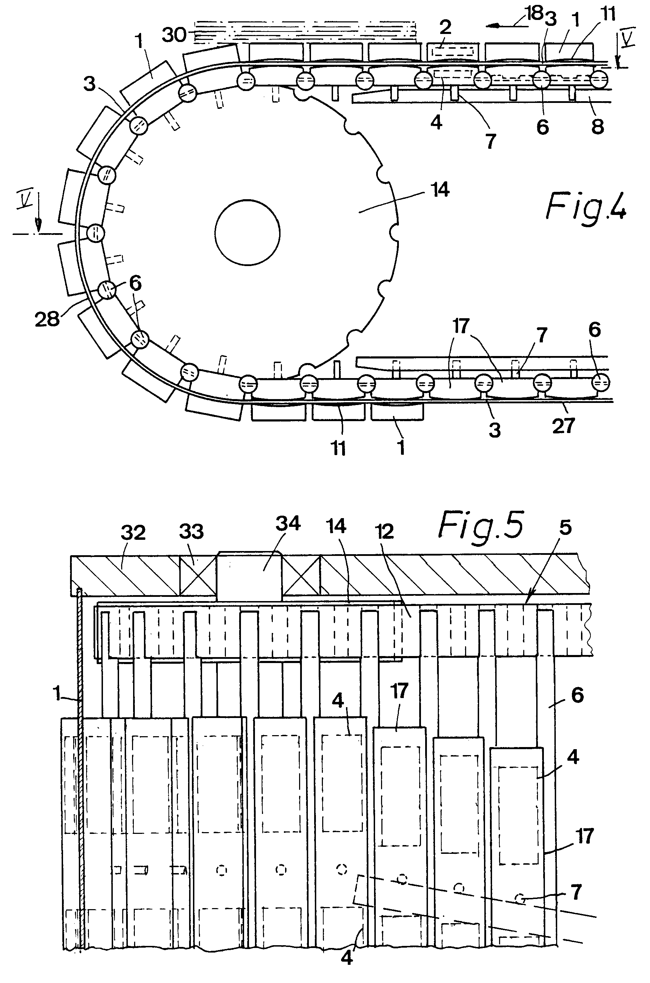

- Fig. 4: einen senkrechten Schnitt durch einen Teil der Vorrichtung gemäß den Fig. 1 bis 3 in einem anderen Maßstab und
- Fig. 5: einen Schnitt durch die Darstellung der Fig. 4 entsprechend der Schnittlinie V-V.

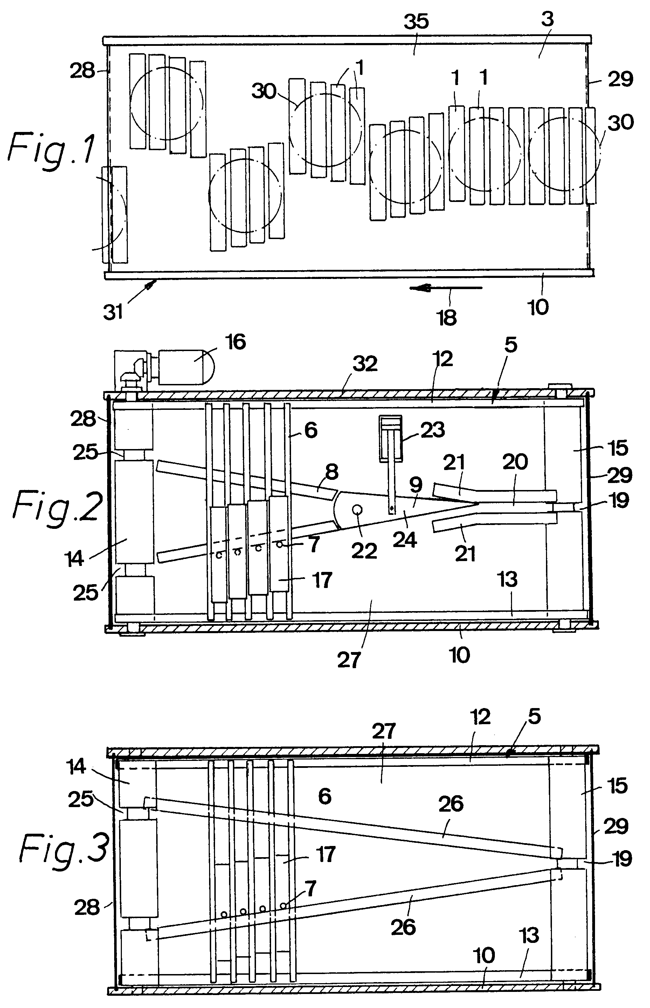

Die Fördervorrichtung, die in der Zeichnung gezeigt ist, besteht im wesentlichen aus einer umlaufenden endlosen Förderkette 5, die im wesentlichen aus den beiden Zahnriemen 12 und 13 besteht, zwischen denen sich die Führungsstangen 6 erstrecken. Die Führungsstangen 6 sind beispielsweise Rundstangen, die an den Enden je einen Schlitz aufweisen, in die die Zahnriemen 12 und 13 eingeschoben sind. Die Zahnriemen 12 und 13 laufen je über die Umlenkrollen 14 und 15, die durch den Motor 16 angetrieben sind. Der Motor ist nur in der Darstellung der Fig. 2 gezeigt.

Je zwei benachbarte Führungsstangen 6 tragen zwischen sich die Schiebestücke 17, die in sich die Magnetelemente 4 aufnehmen. Die Schiebestücke 17 können beispielsweise aus Kunststoff bestehen, und die Magnetelemente 4 sind in den Kunststoff eingebettet. Die Außenfläche der Schiebestücke 17 ist vorzugsweise konvex gestaltet.

Auf der Innenseite besitzen die Schiebestücke Führungsstifte 7, die mit den Führungsmitteln 8 bzw. 9 zusammenwirken, wie dies insbesondere aus der Darstellung der Fig. 2 hervorgeht.

Die Vorschubrichtung des oberen Trumms der Förderkette ist mit dem Pfeil 18 bezeichnet. Die Führungsstifte 7 sind zunächst in der Nut 19 der Umlenkrolle 15 geführt und gelangen dann in die Nut 20 zwischen den Schienen 21. Das weichenartige Führungsmittel 9 ist um das Gelenk 22 beweglich und wird durch den Arbeitszylinder 23, der beispielsweise durch Druckluft beaufschlagt ist, bewegt. Auf diese Weise können die Führungsstifte der Schiebestücke 17 auf die eine oder andere Seite der Zunge 24 gelangen und werden je nachdem nach der einen oder anderen Seite verschoben, wie dies aus der Fig. 2 hervorgeht.

Die Umlenkrolle 14 besitzt zwei Nuten 25 für die Führungsstifte 7.

Wenn die Schiebestücke 17 mit den Führungsstiften 7 die Umlenkrolle 14 passiert haben, wirken die Führungsstifte mit den untenliegenden Schienen 26 zusammen, wie dies aus der Fig. 3 hervorgeht. Bei der Rücklaufbewegung werden somit die Schiebestücke 17 wieder in die Mittellage gebracht, so daß die Führungsstifte 7 die Nut 19 erreichen.

Der vorstehend beschriebene Antrieb der Schiebestücke 17 mit allen zugehörigen Einrichtungen wird von der Platte 3 eingehüllt, deren oberer Teil 35 und deren unterer Teil 27 eben sind, während die Endteile 28 und 29 jeweils halbzylindrisch gewölbt sind. Die Abmessungen insbesondere der halbzylindrischen Teile der Platte sind dabei so gehalten, daß die Schiebestücke 17 an der Innenfläche der Teile 28 und 29 entlanggleiten. Die konvexe Wölbung der Außenseite der Schiebestücke 17 ist dem angepaßt.

Auf der Außenseite der Platte 3 mit den Teilen 27, 28 und 35 bewegen sich die Unterlagen 1. Diese Unterlagen 1 bestehen vorzugsweise aus Kunststoff und tragen eingelagerte Magnetelemente 2. Ebenso wie die Magnetelemente 4 sind die Magnetelemente 2 paarweise angeordnet, was sicherstellt, daß die Unterlagen 1 sich genau parallel zu den Schiebestücken 17 ausrichten. In der Regel ist jedem Schiebestück 17 eine Unterlage 1 zugeordnet. Die Unterseite der Unterlagen ist sinngemäß konkav gewölbt.

Bei angetriebener Förderkette 5 bewegen sich die Unterlagen 1 auf der Platte 3 entlang der Teile 35, 28 und 29 und auch auf der Unterseite 27 in gleicher Weise, wie die Schiebestücke sich auf der Innenseite bewegen. Alle Seitenbewegungen der Schiebestücke, die hervorgerufen sind durch das Zusammenwirken der Führungsstifte 7 mit den Führungsmitteln 8 und 9 übertragen sich auf die Unterlagen 1.

Auf den Unterlagen 1, wobei beispielsweise je vier Unterlagen zusammenwirken, liegen die Produktportionen 30, die in der Fig. 1 durch strichpunktierte Kreise angedeutet sind. Dabei wird angenommen, daß die Produktstapel zunächst in der Mitte der Fördervorrichtung 31 im Bereich der Umlenkrolle 15 aufgelegt werden und daß die Produktstapel dann jeweils seitlich verschoben werden, je nach der Beaufschlagung des Arbeitszylinders 23. Bei der Umlenkung entlang des Plattenteiles 28 werden die Produktstapel abgegeben, beispielsweise auf nachgeschaltete Förderbänder oder ähnliche Einrichtungen.

Die Beaufschlagung des Arbeitszylinders 23 erfolgt durch eine geeignete Steuereinrichtung, die beispielsweise in gleichförmigem Rhythmus arbeitet, wenn es nur darum geht, aus einer Reihe von Produktstapeln zwei Reihen zu bilden. Durch geeignete Ausgestaltung der Führungsmittel 8 und 9 und der zugehörigen Einrichtungen können aber auch eine größere Zahl von Produktstapeln geschaffen werden. Umgekehrt kann auch die Zahl der Reihen von Produktstapeln verringert werden.

Die erfindungsgemäße Einrichtung kann insbesondere dazu benützt werden, mit einer vorgeschalteten Waage zusammenzuwirken. Die Produktstapel werden dann je nach Gewicht unterschiedlichen Reihen zugeführt bzw. aus dem Produktstapelstrom ausgeschieden, wenn ein unzulässiges Gewicht angezeigt wird.

Die erfindungsgemäße Vorrichtung kann insbesondere auch dazu benützt werden, die Unterlagen 1 automatisch einer Reinigungseinrichtung zuzuführen. So kann eine Reihe einem Reinigungsablauf entsprechen, wobei dann beispielsweise die Unterlagen von der Platte abgenommen werden.

Die Platte 3 mit den zugehörigen Teilen 27, 28 und 35 ist vorzugsweise mit Abdeckungen 10 und 32 versehen. Die Abdeckung 10 ist dabei abnehmbar, um den Innenbereich der Platte 3 mit den zugehörigen Teilen zugänglich zu machen. Die Abdeckung 32, die insbesondere auch das Lager 33 für die Wellen 34 der Umlenkrollen aufnimmt, ist vorzugsweise Teil eines Maschinengestells, von dem die Fördervorrichtung 31 absteht, so daß sie allseits zugänglich ist.

## Patentansprüche

1. Fördervorrichtung zum Positionieren von Produktportionen, um die Zahl der Reihen der Produktportionen zu verändern, wobei die Produktportionen auf in Förderrichtung bewegten Unterlagen (1) ruhen, die durch verstellbare Steuerungsmittel seitlich verschiebbar sind, dadurch gekennzeichnet, daß die Unterlagen (1) mit Magnetelementen (2) versehen sind und auf einer dünnen Platte (3) aus nicht magnetisierbarem Material aufliegen und daß unter der Platte (3) weitere Magnetelemente (4) angeordnet sind, die mit den Magnetelementen (2) der Unterlagen (1) magnetisch zusammenwirken und diese mitnehmen und die Unterlagen (1) sowohl in Förderrichtung bewegen als auch seitlich verschieben und somit als verstellbare Steuermittel wirken.

2. Fördervorrichtung nach Anspruch 1, dadurch gekennzeichnet, daß die Magnetelemente (2,4) mindestens teilweise Permanentmagnete sind.

3. Fördervorrichtung nach einem oder beiden der vorhergehenden Ansprüche, dadurch gekennzeichnet, daß die Permanentmagnete (2,4) auf der einen Seite der Platte (3) mit permanentmagnetischen oder ferromagnetischen Magnetelementen (4,2) auf der anderen Plattenseite zusammenwirken.

4. Fördervorrichtung nach einem oder mehreren der vorhergehenden Ansprüche, dadurch gekennzeichnet, daß jede Unterlage (1) nebeneinander zwei Magnetelemente (2) aufweist, denen je zwei Magnetelemente (4) unter der Platte (3) entsprechen.

5. Fördervorrichtung nach einem oder mehreren der vorhergehenden Ansprüche, dadurch gekennzeichnet, daß die Platte (3) auf der Auflageseite flach strukturiert ist.

6. Fördervorrichtung nach einem oder mehreren der vorhergehenden Ansprüche, dadurch gekennzeichnet, daß die Platte (3) einen vorzugsweise auswechselbaren Kunststoffüberzug trägt.

7. Fördervorrichtung nach einem oder mehreren der vorhergehenden Ansprüche, dadurch gekennzeichnet, daß die Unterlagen (1) aus Kunststoffkörpern bestehen, in die die Magnetelemente (2) eingesetzt sind.

8. Fördervorrichtung nach einem oder mehreren der vorhergehenden Ansprüche, dadurch gekennzeichnet, daß die Magnetelemente (4) unter der Platte (3) von einer endlosen Förderkette (5) getragen sind, die im wesentlichen aus parallelen, sich rechtwinklig zur Förderrichtung erstreckenden Führungsstangen (6) besteht, wobei die Magnetelemente (4) auf den Führungsstangen (6) verschiebbar sind, mit Führungsstiften (7) an den Magnetelementen (4) und schienen- bzw. weichenartigen Führungsmitteln (8,9) für die Führungsstangen (6) und wobei die Platte (3) der Gestalt der Förderkette (5) angepaßt ist und diese umhüllt.

9. Fördervorrichtung nach Anspruch 8, gekennzeichnet durch eine abnehmbare, stirnseitige Abdeckung (10) der Förderkette (5).

10. Fördervorrichtung nach einem oder mehreren der vorhergehenden Ansprüche, dadurch gekennzeichnet, daß die auf der Platte (3) aufliegenden Flächen (11) der Unterlagen (1) konkav geformt sind.

11. Fördervorrichtung nach einem oder mehreren der vorhergehenden Ansprüche, dadurch gekennzeichnet, daß die Magnetelemente unter der Platte aus einer Vielzahl von Elektromagneten bestehen, die zusammen durch Zu- und Abschalten einzelner Magnete ein wanderndes Magnetfeld bilden, das die Unterlagen in Förderrichtung bewegt und/oder auch seitlich verschiebt.

## Claims

1. Transport device for positioning product portions in order to alter the number of rows of the product portions, said product portions resting on supports (1) movable in the direction of transport and capable of being laterally displaced by means of adjustable means of control, characterized in that the supports (1) are provided with magnetic elements (2) and are placed on a thin plate (3) of non-magnetizable material and that further magnetic elements (4) are arranged below said plate (3) said magnetic elements (4) acting together magnetically with the magnetic elements (2) of the supports (1) and driving them and moving said supports (1) in the direction of transport as well as displacing them laterally, thus acting as an adjustable means of control.

2. Transport device according to claim 1, characterized in that at least some of the magnetic elements (2,4) are permanent magnets.

3. Transport device according to one or both of the preceding claims, characterized in that the permanent magnets (2,4) on the one side of the plate (3) act together with permanently magnetic or ferromagnetic magnetic elements (4,2) on the other side of the plate.

4. Transport device according to one or several of the preceding claims, characterized in that each support (1) has two neighboring magnetic elements (2) each corresponding to two magnetic elements (4) below the plate (3).

5. Transport device according to one or several of the preceding claims, characterized in that the plate (3) has on the side of support a flat design.

6. Transport device according to one or several of the preceding claims, characterized in that the plate (3) is provided with a plastic sheating preferably detachable.

7. Transport device according to one or several of the preceding claims, characterized in that the supports (1) are designed as plastic bodies incorporating the magnetic elements (2).

8. Transport device according to one or several of the preceding claims, characterized in that the magnetic elements (4) below the plate (3) are carried by an endless transport chain (5) essentially comprising parallel guide rods (6) running at right angles to the direction of transport, the magnetic elements (4) on the guide rods (6) being movable, with guide pins (7) on the magnetic elements (4) and rail- or shunt-like guide means (8,9) for the guide rods (6), said plate (3) being assimilated to the shape of the transport chain (5) and surrounding it.

9. Transport device according to claim 8, characterized by a removable front end cover (10) for the transport chain (5).

10. Transport device according to one or several of the preceding claims, characterized in that the surfaces (11) of the supports (1) resting on the plate (3) are of concave design.

11. Transport device according to one or several of the preceding claims, characterized in that the magnetic elements below the plate comprise a multitude of electric magnets together forming a floating magnetic field whenever individual magnets are connected or disconnected, said magnetic field moving the supports in the direction of transport and/or displacing them laterally.

## Revendications

1. Appareillage de transport pour positionner des portions de produit, pour en modifier le nombre de rangées, les portions de produit étant placées sur des supports (1) mobiles dans le sens du transport, lesquels peuvent être déplacés latéralement par des moyens de commande réglables, caractérisé en ce que les supports (1) sont équipés d'éléments magnétiques (2) et reposent sur une fine plaque (3) en matériau non-magnétisable et en ce que sont disposés sous la plaque (3) d'autres éléments magnétiques (4) qui agissent de manière magnétique avec les éléments magnétiques (2) des supports (1) et entraînent ces supports (1) et les déplacent aussi bien dans le sens de transport que dans le sens latéral et agissent ainsi comme un moyen de commande réglable.

2. Appareillage de transport suivant la revendication 1 caractérisé en ce que les éléments magnétiques (2,4) sont au moins partiellement des aimants permanents.

3. Appareillage de transport suivant l'une ou l'autre des revendications précédentes ou les deux caractérisé en ce que les aimants permanents (2,4) sur l'une des faces de la plaque (3) agissent de concert avec des éléments magnétiques permanents ou ferromagnétiques (4,2) sur l'autre face de la plaque.

4. Appareillage de transport suivant l'une ou plusieurs des revendications précédentes caractérisé en ce que chaque support (1) présente deux éléments magnétiques (2) l'un à côté de l'autre, auxquels correspondent deux éléments magnétiques (4) sous la plaque (3).

5. Appareillage de transport suivant l'une ou plusieurs des revendications précédentes caractérisé en ce que la plaque (3) est de structure plate sur sa face d'appui.

6. Appareillage de transport suivant l'une ou plusieurs des revendications précédentes caractérisé en ce que la plaque (3) comporte un revêtement en matière plastique de préférence interchangeable.

7. Appareillage de transport suivant l'une ou plusieurs des revendications précédentes caractérisé en ce que les supports (1) sont constitués par des corps en matière plastique renfermant les éléments magnétiques (2).

8. Appareillage de transport suivant l'une ou plusieurs des revendications précédentes caractérisé en ce que les éléments magnétiques (4) sous la plaque (3) sont portés par une chaîne de transport sans fin (5), se composant pour l'essentiel de tiges de guidage (6) parallèles et disposées perpendiculaires au sens de transport, les éléments magnétiques (4) étant coulissants sur les tiges de guidage (6), avec des plots de guidage (7) sur les éléments magnétiques (4) et des moyens de guidage et/ou d'aiguillage (8,9) pour les tiges de guidage (6) et la plaque (3) épousant et enveloppant la forme de la chaîne de transport (5).

9. Appareillage de transport suivant la revendication 8, caractérisé par une couverture (10) frontale et démontable de la chaîne de transport (5).

10. Appareillage de transport suivant l'une ou plusieurs des revendications précédentes caractérisé en ce que les surfaces (11) des supports (1) en appui sur la plaque (3) sont de forme concave.

11. Appareillage de transport suivant l'une ou plusieurs des revendications précédentes caractérisé en ce que les éléments magnétiques sous la plaque sont composés d'une multitude d'électro-aimants, qui ensemble génèrent un champ magnétique flottant en fonction de la coupure ou de la mise sous tension de divers aimants, déplaçant les supports dans le sens de transport et/ou aussi latéralement.
